# EUROPÄISCHE PATENTANMELDUNG

(11) **EP 2 801 948 A1**
(43) Veröffentlichungstag der Anmeldung: **12.11.2014**
(21) Anmeldenummer: 14001172.7
(22) Anmeldetag: 28.03.2014
(51) Int. Cl.: G06Q 50/20

(54) **Verfahren zum Abrufen und zur Bereitstellung von Antwortinformationen**

(30) Priorität: 06.05.2013 DE 102013007663; 11.06.2013 DE 102013009685
(71) Anmelder: ZGS Bildungs-GmbH, 45891 Gelsenkirchen (DE)
(72) Erfinder: Werkhausen, Dieter, 22391 Hamburg (DE); Schäper, Bernd, 59399 Olfen (DE)
(74) Vertreter: Aulich, Martin

(57) **Zusammenfassung**

Verfahren und System zum Abrufen und zur Bereitstellung von mathematische Aufgaben betreffenden Antwortinformationen mittels eines Datenverarbeitungssystems, bei dem nach Eingabe oder Auswahl von eine mathematische Aufgabe repräsentierenden Informationen durch einen Benutzer diesem das Ergebnis dieser Aufgabe beinhaltende Antwortinformationen - Ergebnisantwortinformationen - auf elektronischem Weg übermittelt werden. Das Verfahren ist gekennzeichnet durch folgende Schritte:
(a) nach Eingabe von Merkmalswerten von die mathematische Aufgabe klassifizierenden Merkmalen durch den Benutzer oder eine andere Person, insbesondere nach Auswahl vorgeblendeter Merkmalswerte, erfolgt nach Maßgabe der Merkmalswerte eine Abfrage in einer Datenbank nach diesen Merkmalswerten zugeordneten, die Ergebnisantwortinformationen ergänzenden Antwortinformationen,
(b) falls in der Datenbank zu den die mathematischen Aufgabe klassifizierenden Merkmalswerten passende ergänzende Antwortinformationen hinterlegt sind, werden diese dem Benutzer ebenfalls auf elektronischem Wege übermittelt, insbesondere zusammen mit den Ergebnisantwortinformationen.

## Beschreibung

Die vorliegende Erfindung betrifft ein Verfahren zum Abrufen und zur Bereitstellung von mathematische Aufgaben betreffenden Antwortinformationen mittels eines Datenverarbeitungssystems, bei dem nach Eingabe von eine mathematische Aufgabe repräsentierende Informationen durch einen Benutzer diesem das Ergebnis dieser Aufgabe beinhaltende Antwortinformationen - Ergebnisantwortinformationen - auf elektronischem Weg übermittelt werden. Des Weiteren betrifft die Erfindung ein Programmprodukt zur Ausführung des Verfahrens sowie eine Datenverarbeitungseinrichtung mit einem Speicher, in dem ein solches Programmprodukt hinterlegt ist.

Es sind Web-basierte Anwendungen bekannt, bei denen ein Benutzer, beispielsweise ein Schüler, in ein Web-Interface eine zu lösende mathematische Aufgabe eingeben kann. Das Ergebnis diese Aufgabe wird unmittelbar im Anschluss angezeigt. Dabei wird die Lösung mittels hinterlegter Algorithmen automatisiert erzeugt.

Solche Anwendungen weisen diverse Nachteile auf. So können beispielsweise nur Auf-gabentypen bearbeitet werden, die den hinterlegten Algorithmen "bekannt" sind. Weiter ist dem Benutzer mit der bloßen Anzeige des Ergebnisses regelmäßig nicht ausreichend geholfen. Denn der Benutzer hat regelmäßig nicht nur Interesse an der Lösung. Vielmehr möchte er Techniken erlernen, die ihm zukünftig helfen, eine derartige mathematische Aufgabe eigenständig zu lösen.

Hiervon ausgehend ist es Aufgabe der vorliegenden Erfindung, das eingangs genannte Verfahren weiterzuentwickeln. Des Weiteren ist es Aufgabe der vorliegenden Erfindung, ein entsprechendes Programmprodukt zur Ausführung des Verfahrens anzugeben sowie eine Datenverarbeitungseinrichtung, auf der das Programmprodukt ablaufen kann.

Diese Aufgabe wird gelöst durch ein Verfahren mit den Merkmalen des Anspruchs 1, durch ein Programmprodukt mit den Merkmalen des Anspruchs 8 sowie durch eine Datenverarbeitungseinrichtung mit den Merkmalen des Anspruchs 9.

Danach ist das erfindungsgemäße Verfahren dadurch gekennzeichnet, dass der Benutzer selbst, etwa ein Schüler, oder eine dafür kompetente Person, beispielsweise ein Nachhilfelehrer, in das Datenverarbeitungssystem Merkmalswerte von Merkmalen eingibt, die die mathematische Aufgabe nach bestimmten Kriterien klassifizieren bzw. einer oder mehreren Gruppen einer vorgegebenen Gesamtheit von Gruppen zuordnen. Im Rahmen der Anmeldung soll die "Eingabe" von Daten in das Datenverarbeitungssystem dabei auch die Auswahl von auf einem Anzeigemittel bzw. einem Bildschirm vorgegebenen bzw. vorgeblendeten Merkmalswerten umfassen.

Nachdem diese Merkmalswerteingabe erfolgt ist, wird nach Maßgabe der Merkmalswerte eine automatische Abfrage in einer Datenbank des Datenverarbeitungssystems durchgeführt. Diese Abfrage erfolgt nach in der Datenbank hinterlegten, den Merkmalswerten zugeordneten, ergänzenden Antwortinformationen. Diese ergänzen die das Ergebnis und gegebenenfalls den konkreten Lösungsweg der gestellten mathematischen Aufgabe beinhaltenden Ergebnisantwortinformationen.

Falls die vorgenannte Abfrage dann ergibt, dass in der Datenbank zu den eingegebenen Merkmalswerten passende, ergänzende Antwortinformationen hinterlegt sind, werden diese dem Benutzer (ebenfalls) auf elektronischem Wege übermittelt. Regelmäßig erfolgt diese Übermittlung zusammen mit den Ergebnisantwortinformationen.

Bei den ergänzenden Antwortinformationen handelt es sich vorteilhafterweise um ein oder mehrere allgemeine Übungsaufgaben oder ein oder mehrere allgemeine Lösungswege, die dem Typus der gestellten mathematischen Aufgabe zugeordnet sind. Allgemeiner ausgedrückt sind dies allgemeine Übungsaufgaben bzw. Lösungswege, die zu den eingegebenen Merkmalswerten in einer bzw. der Datenbank hinterlegt sind bzw. die den Merkmalswerten in der Datenbank zugeordnet sind.

Erfindungsgemäß ist es demnach mit anderen Worten möglich, dass ein Benutzer dem Datenverarbeitungssystem durch Eingabe eine zu lösende mathematische Aufgabe stellt, beispielsweise indem er sie in ein geeignetes Web-Interface eingibt bzw. über dieses in das System einstellt. Bevorzugt er selbst oder ggf. die hierfür kompetente Person klassifiziert dann diese mathematische Aufgabe mittels der bestimmten, vorgegebenen Merkmale bzw. der vorgegebenen Merkmalswerte.

Beispielsweise könnte vorgesehen sein, dass der Benutzer die spezielle schulische Klassenstufe angibt, in der die von ihm eingegebene mathematische Aufgabe regelmäßig gestellt bzw. erarbeitet wird. Weiter kann vorgesehen sein, dass er aus mehreren verschiedenen vorgegebenen mathematischen Themengruppen diejenige auswählt, zu der die mathematische Aufgabe gehört. In diesem Fall wäre das klassifizierende Merkmal demnach das Merkmal "Themengruppe", wobei als Merkmalswerte beispielsweise "Algebra", "Analysis", "Geometrie" oder dergleichen vorgegeben werden könnte. In ähnlicher Weise könnten hierarchisch abgestuft verschiedene Unterthemengruppen als Merkmale definiert werden. Es sind verschiedenste Klassifizierungsmerkmale und diesen zugeordnete Merkmalswerte denkbar.

Zu verschiedenen Merkmalen bzw. Merkmalswerten oder Kombinationen von Merkmalen oder Merkmalswerten können dann allgemeine Übungsaufgaben in der Datenbank hinterlegt sein. Je nach eingegebenen Merkmalswerten werden dann ein oder mehrere dieser allgemeinen Übungsaufgaben aus der Datenbank abgerufen. Diese Übungsaufgaben dienen dem Benutzer dann beispielsweise dazu, mittels zu seiner mathematischen Aufgabe gleichartigen Aufgaben den entsprechenden Themenbereich zu vertiefen bzw. stärker einzuüben. Alternativ oder zusätzlich sind in der Datenbank dann ein oder mehrere allgemeine Lösungswege oder Lösungsbausteine hinterlegt, die gleichartige Aufgaben betreffen bzw. die in allgemeiner Form erläutern, wie derartige Aufgaben zu lösen sind. Auch diese können dann nach Maßgabe der eingegebenen Merkmalswerte abgerufen und dem Benutzer auf elektronischem Wege übermittelt werden.

Der Begriff "auf elektronischem Wege" umfasst dabei verschiedenste Varianten der modernen Kommunikation. Der Hauptanwendungsfall der Erfindung wird aber vermutlich sein, einen Benutzer über ein Web-Interface die Eingabe der mathematischen Aufgabe sowie der die Aufgabe klassifizierenden Merkmalswerte und ggf. weiterer Daten zu ermöglichen. Die Antwortinformationen, d.h. sowohl die Ergebnisantwortinformationen als auch die ergänzenden Antwortinformationen, werden dann dem Benutzer bevorzugt per E-Mail übersendet. Denkbar ist aber natürlich auch, diese Informationen dem Benutzer direkt per Web-Interface zur Verfügung zu stellen. Auch die Verwendung von Softwareprogrammen (Apps) ist denkbar, über die der Benutzer die Daten eingibt, wobei diese Daten dann anschließend über Datenfernübertragung, vorzugsweise über das Internet, an eine zentrale Recheneinrichtung des Datenverarbeitungssystems geschickt wird, die dann insbesondere die Datenbankabfragen ausführt.

Weitere Merkmale der vorliegenden Erfindung ergeben sich aus den beigefügten Patentansprüchen, der nachfolgenden Beschreibung eines bevorzugten Ausführungsbeispiels sowie aus der beigefügten Zeichnung. Darin zeigt:

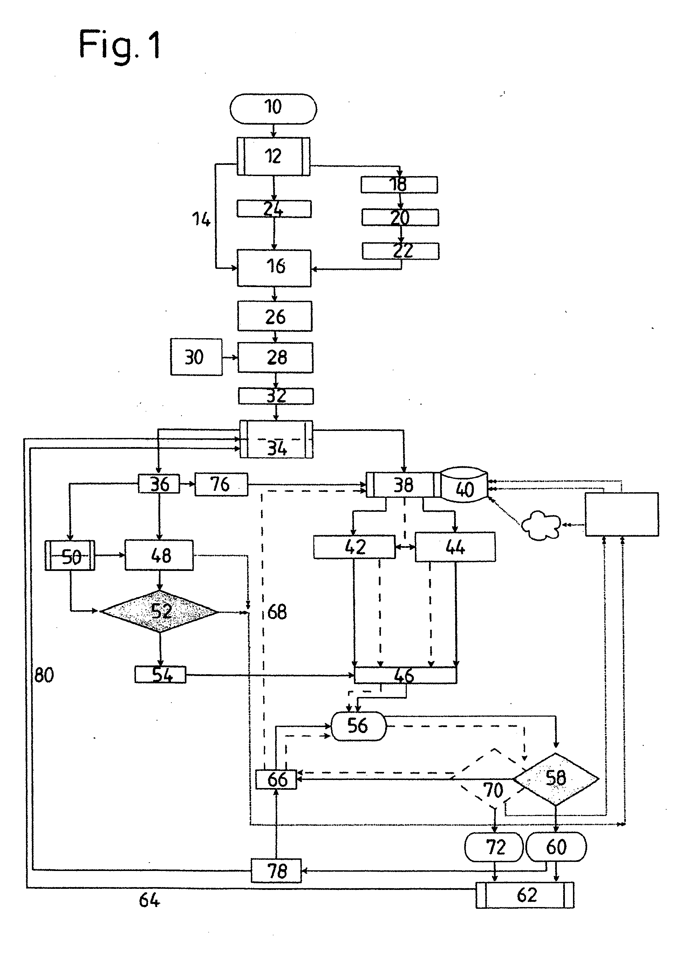

- Fig. 1: ein Ablaufdiagramm als Prinzipskizze, in dem wesentliche Teile des erfindungsgemäßen Verfahrens dargestellt sind.

Das erfindungsgemäße Verfahren und das erfindungsgemäße Datenverarbeitungssystem richtet sich in der Regel an Schüler, die bei der Lösung mathematischer Aufgaben Unterstützungsbedarf haben. Erfindungsgemäß soll die Unterstützung aber nicht nach der bloßen Übermittlung des konkreten Ergebnisses der Aufgabe enden, sondern deutlich darüber hinausgehen. Das erfindungsgemäße Verfahren kann dabei auf verschiedene Weise umgesetzt werden. Ein Umsetzungsbeispiel ist nachfolgend näher beschrieben.

Nach dem Start des Prozesses (10) kann sich der Benutzer in einer Anmeldemaske an dem erfindungsgemäßen Datenverarbeitungssystem zum Abrufen und zum Bereitstellen von mathematischen Aufgaben betreffenden Antwortinformationen als Benutzer anmelden (12).

Hierfür stellt das Datenverarbeitungssystem auf einem Anzeigemittel, vor dem der Benutzer sitzt, eine geeignete Eingabemaske bereit. Vorzugsweise wird der Benutzer an einer entsprechenden lokalen Computereinrichtung mit Bildschirm sitzen, die über Internet mit einer zentralen Computereinrichtung verbunden ist, auf der die wesentlichen Verfahrensprozesse ablaufen bzw. die wesentliche Prozesse verwaltet.

Falls der Benutzer ein Bestandskunde ist, er demnach das erfindungsgemäße Datenverarbeitungssystem bereits zu einem früheren Zeitpunkt genutzt hat und sich dementsprechend zu einem früheren Zeitpunkt bereits als Kunde registriert hat, liegen ihm ihm zugeordnete Anmeldedaten bzw. Login-Daten vor (14), die er in die Eingabemaske eingeben kann.

Sollte es sich bei dem Benutzer nicht um einen Bestandskunden handeln, ist alternativ vorgesehen, dass er sich als Kunde erstmalig individuell registrieren kann (18). Im Rahmen des Registrierungsvorgangs kann er insbesondere seinen Namen und seine Adresse eingeben. Welche Daten für eine Registrierung notwendig sind, ist naturgemäß frei bestimmbar und für das erfindungsgemäße Verfahren nicht entscheidend. Der Benutzer kann im nächsten Schritt auswählen, welche kostenpflichtigen Leistungen er von dem Datenverarbeitungssystem beziehen möchte (20). Er kann sich beispielsweise entscheiden, für welchen Zeitraum er die volle Funktionalität des erfindungsgemäßen Systems nutzen möchte. Weiter kann er die Zahlungsweise bestimmen (22), d.h. festlegen, auf welche Weise er die anfallenden Gebühren begleichen möchte (beispielsweise Überweisung nach Erhalt der Rechnung, Vorkasse, Bankeinzug, Kreditkarte etc.).

Alternativ zu der Registrierung als Kunde kann er sich auch als Gast registrieren lassen (24). Als Gast stehen im Gegensatz zu der Registrierung als Kunde regelmäßig nur eingeschränkte Nutzungsmöglichkeiten zur Verfügung.

Wenn der Benutzer am System angemeldet ist - unabhängig davon, ob er als Gast, Erstkunde oder Bestandskunde angemeldet ist - kann er im nächsten Schritt seinen Auftrag definieren, den das System abarbeiten soll.

Dabei kann er die mathematische Aufgabe, bei deren Lösung in das System unterstützen soll, nach bestimmten Kriterien klassifizieren (16). In der vorliegenden Ausführungsform werden ihm hierfür die Eingabefelder "Klassenstufe", "Themenschwerpunkt", "Unterthema" präsentiert. Bei diesen Feldern handelt es sich um Merkmale, die die mathematische Aufgabe, die der Benutzer eingibt, einer oder mehreren Gruppen einer Grundgesamtheit an Gruppen mathematische Aufgaben zuordnen. Die entsprechenden Merkmalswerte, die zu diesen Merkmalen eingegeben werden können, sind im vorliegenden Ausführungsbeispiel bereits hinterlegt und müssen nur ausgewählt werden.

So können beispielsweise für das Merkmal "Klassenstufe" die Merkmalswert "1. Klasse", "2. Klasse", ... "13. Klasse" hinterlegt sein.

Als Merkmalswerte für das Merkmal "Themenschwerpunkt" könnten beispielsweise hinterlegt sein "Algebra", Analysis", "Geometrie" und dergleichen.

Für die Merkmalswerte "Unterthema" können beispielsweise hinterlegt sein "Berechnung Flächeninhalt Dreieck", "Berechnung Flächeninhalt Quadrat", "Addition von Brüchen" und dergleichen mehr. Wie der Fachmann erkennt, gibt es verschiedenste Möglichkeiten, mathematische Aufgaben nach Themenschwerpunkten, Unterthemen oder anderen Merkmalen zu klassifizieren bzw. Gruppen zuzuordnen.

Weiter muss der Benutzer dem System die mathematische Aufgabe mitteilen, die er gelöst haben möchte bzw. zu der er Unterstützung erwartet. Dies kann er beispielsweise im Freitext (26) tun, indem er die Aufgabe in ein entsprechendes Eingabefeld schreibt. Er kann seiner Eingabe auch Anlagen beifügen (28), wie pdf-Dateien, Fotos oder auch eine Sprachdatei (30). Denkbar ist natürlich auch, dass ihn bei der Eingabe der Aufgabe vorgeblendete Auswahlfelder unterstützen.

Sämtliche eingegebenen Informationen, also die Informationen, die die Aufgabe selbst betreffen sowie die die Aufgabe klassifizierenden Merkmale, werden durch Betätigung eines entsprechenden Eingabefeldes durch den Benutzer in das System eingestellt bzw. der zentralen Computereinrichtung übersandt (32).

Ein an sich bekanntes Ticketsystem (34) (Software) organisiert in an sich bekannter Weise den Empfang, die Bestätigung und die interne Verwaltung und Weiterbearbeitung des eingestellten Benutzerauftrags. Das Ticketsystem sorgt beispielsweise zum einen dafür, dass die eingestellten Aufgabeninformationen an eine kompetente Person übermittelt werden (36). Dies ist in der Regel ein ausgebildeter Nachhilfelehrer.

Zum anderen sorgt es dafür, dass die Merkmalswerte, die der Benutzer zur Klassifizierung der mathematischen Aufgabe eingegeben hat, an ein sogenanntes Aufgabensystem (Software) geleitet werden (38).

Dieses Aufgabensystem ist mit einer Datenbank (40) verbunden. In dieser Datenbank sind zu den oben beschriebenen, einzelnen Merkmalswerten oder Merkmalswertkombinationen ergänzende Antwortinformationen hinterlegt.

Zum einen sind Übungsaufgaben (42) gespeichert. Dies sind Aufgaben, die dem Benutzer helfen sollen, das mathematische Themengebiet, das durch die Aufgabe repräsentiert wird, vertieft zu studieren bzw. zu erlernen. Je nach eingegebenen Merkmalswerten werden dann ein oder mehrere dieser allgemeinen Übungsaufgaben aus der Datenbank abgerufen.

Alternativ oder zusätzlich sind in der Datenbank in ähnlicher Weise zu den verschiedenen Merkmalswerten oder Merkmalskombinationen ein oder mehrere allgemeine Beschreibungen, Lösungswege oder Lösungsbausteine hinterlegt (44), die gleichartige Aufgaben betreffen bzw. die in allgemeiner Form erläutern, wie derartige Aufgaben zu lösen sind. Auch diese können dann nach Maßgabe der eingegebenen Merkmalswerte abgerufen werden.

In der Regel werden die ergänzenden Antwortinformationen nicht nur abhängig von einem Merkmalswert in der Datenbank hinterlegt sein, sondern abhängig von mehreren Merkmalswerten. Beispielsweise ist es sinnvoll, zu der Merkmalskombination "Algebra", "3. Klasse" einen anderen Satz von Übungsaufgaben zu hinterlegen als zu der Merkmalskombination "Algebra", "10. Klasse". Denn naturgemäß unterscheiden sich in dem selben allgemeinen Themengebiet die Schwierigkeitsgrade von mathematischen Aufgaben von Klassenstufe zu Klassenstufe.

Abhängig von den eingestellten Merkmalswerten wählt das Aufgabensystem dann automatisch die zu der mathematischen Aufgabe passende(n) Übungsaufgabe(n) aus und/oder passende allgemeine Beschreibungen/Lösungswege/Lösungsbausteine und integriert diese automatisch in eine elektronische Antwort (46). Bei der vorliegenden Ausführungsform handelt es sich bei der Antwort um eine E-Mail, die das Aufgabensystem automatisch erstellt und in die die Übungsaufgaben und/oder allgemeinen Beschreibungen etc. von Lösungswegen auszugsweise als Anhang integriert werden.

Die kompetente Person (36), also regelmäßig der Nachhilfelehrer, löst quasi gleichzeitig die von dem Benutzer eingestellte mathematische Aufgabe manuell (48) oder stellt sie in ein Lösungssystem (50) ein, in der Regel ebenfalls eine Software, mit dem die Aufgabe automatisiert lösbar ist. Regelmäßig wird dabei auch der Lösungsweg erarbeitet, der beschritten werden kann/muss, um die individuelle Aufgabe zu lösen.

Es wird darauf hingewiesen, dass es sich bei der individuellen Lösung und dem individuellen Lösungsweg (52) konkret um das individuelle Ergebnis der eingestellten Aufgabe handelt bzw. um den konkreten Lösungsweg für diese Aufgabe. Im Gegensatz dazu handelt es sich bei den oben beschriebenen allgemeinen Lösungen bzw. Lösungswegen um Lösungen bzw. Lösungswege, die nicht nur die konkrete Aufgabe betreffen, sondern gleichzeitig mehrere Aufgaben desselben Aufgabentypus.

Als Ergebnisantwortinformationen werden zusammenfassend diejenigen Informationen bezeichnet, die die individuelle Lösung und gegebenenfalls zusätzlich den individuellen Lösungsweg umfassen. Diese Ergebnisantwortinformationen (54) werden dann in die bereits erstellte Antwort-E-Mail (46) integriert. Bevorzugt kann dies automatisch erfolgen. Die Antwort-E-Mail (46) umfasst dann neben den Ergebnisantwortinformationen auch die ergänzenden Antwortinformationen, also dementsprechend die allgemeine(n) Übungsaufgabe(n) und/oder den/die allgemeinen Lösungsweg(e) etc.

Die erstellte Antwort-E-Mail (46) wird dann, in der Regel händisch angestoßen durch den Nachhilfelehrer, an den Benutzer übersandt (56). In der E-Mail ist zudem regelmäßig noch ein Link enthalten, mit dem der Benutzer dann, wenn er mit den in der Antwort-E-Mail enthaltenen Informationen einverstanden ist (58, 60) bzw. wenn er sich ausreichend unterstütz fühlt, das den Benutzerauftrag repräsentierende entsprechende Ticket des Ticketsystems aktiv schließen kann (60) bzw. mit anderen Worten den Unterstützungsprozess beenden kann (62). Abschließend erfolgt dann der eigentliche Zahlungsvorgang (64).

Falls der Benutzer mit dem Ergebnis der Antwortinformationen allerdings nicht zufrieden ist, wird die Möglichkeit eingeräumt, mit dem Nachhilfelehrer unmittelbar in Kontakt zu treten (58, 66). Vorzugsweise geschieht dies ebenfalls per E-Mail. Alternativ kann der Kontakt aber auch per Telefon erfolgen. Abhängig von dem Ergebnis der Kommunikation zwischen Nachhilfelehrer und Benutzer kann der Nachhilfelehrer - beispielsweise manuell - noch zusätzliche Übungsaufgaben und Lösungswege aus der Datenbank (40) des Aufgabensystems (38) auswählen (68) und diese in eine weitere Antwort (46) integrieren und auch diese dem Benutzer übersenden.

Falls der Benutzer dann mit den Antwortinformationen zufrieden ist (70, 72), schließt der Nachhilfelehrer das Ticket (72) und beendet den Unterstützungsprozess (62).

Weiter ist noch vorgesehen, dass der Nachhilfelehrer das konkrete Ergebnis und/oder den konkreten Lösungsweg, das/den er gegebenenfalls beim manuellen Lösen der Aufgabe (48) erarbeitet hat, zum weiteren Aufbau der Datenbank (40) in dieser zu den eingegebenen Merkmalswerten hinterlegen kann (74). Hierdurch wird die Datenbank (40) immer weiter ergänzt um neue Lösungswege/Übungsaufgaben zu bereits bekannten oder zu neuen Aufgaben.

Weiter ist vorgesehen, dass dann, wenn der Benutzer die Klassifizierung (16) seiner Aufgabe zu Beginn des Prozesses nicht durchgeführt hat, beispielsweise weil ihm das notwendige Wissen hierzu fehlte, der Nachhilfelehrer diese Klassifizierung der mathematischen Aufgabe durchführt (76). In diesem Fall würde der Nachhilfelehrer die zu der Aufgabe passenden Merkmalswerte in das Aufgabensystem einstellen bzw. in das System eingeben.

Weiter ist vorgesehen, dass der Kunde eine Bewertungsmöglichkeit erhält (78). Über geeignete Bewertungstools kann er die Leistung des Nachhilfelehrers bewerten und dies dem System mitteilen. Die Verwaltung der Bewertungsergebnisse, insbesondere die Zuordnung zu dem entsprechenden Nachhilfelehrer übernimmt das Ticketsystem (80).

Was allgemein das Datenverarbeitungssystem betrifft, mittels dessen die Erfindung umsetzbar ist, so kann dieses jede Art von Datenverarbeitungsvorrichtungen umfassen, die mindestens über einen geeignete Prozessor zur Abarbeitung einzelner Verfahrensschritte verfügt. Dabei wird das Verfahren bevorzugt in einem geeigneten Computernetzwerk umgesetzt werden, etwa im Rahmen eines Client-Server-Systems. Insbesondere eine internetbasierte Lösung ist zu bevorzugen. So kann etwa die Darstellung geeigneter Eingabemasken, über die der Benutzer die notwendigen Daten eingibt, über einen Internet-Client erfolgen, insbesondere in einem Browser. Die Datenbank, die Datenbankabfragen bzw. der gesamte Ablauf des erfindungsgemäßen Verfahrens - oder mindestens ein Teil desselben - kann dann regelmäßig auf einem entsprechenden, entfernt angeordneten Web- oder Anwendungsselver ablaufen bzw. dort softwaretechnisch umgesetzt sein. Regelmäßig kann dabei der Benutzer für seine Eingaben eine Datenverarbeitungseinrichtung benutzen, wie etwa einen PC, ein Mobiltelefon, einen Laptop, einen Tablett-PC oder jede andere Art von Computer.

## Patentansprüche

1. Verfahren zum Abrufen und zur Bereitstellung von mathematische Aufgaben betreffenden Antwortinformationen mittels eines Datenverarbeitungssystems, bei dem nach Eingabe oder Auswahl von eine mathematische Aufgabe repräsentierenden Informationen durch einen Benutzer diesem das Ergebnis dieser Aufgabe beinhaltende Antwortinformationen - Ergebnisantwortinformationen - auf elektronischem Weg übermittelt werden, **gekennzeichnet durch** folgende Schritte:
(a) nach Eingabe von Merkmalswerten von die mathematische Aufgabe klassifizierenden Merkmalen **durch** den Benutzer oder eine andere Person, insbesondere nach Auswahl vorgeblendeter Merkmalswerte, erfolgt nach Maßgabe der Merkmalswerte eine Abfrage in einer Datenbank nach diesen Merkmalswerten zugeordneten, die Ergebnisantwortinformationen ergänzenden Antwortinformationen,
(b) falls in der Datenbank zu den die mathematischen Aufgabe klassifizierenden Merkmalswerten passende ergänzende Antwortinformationen hinterlegt sind, werden diese dem Benutzer ebenfalls auf elektronischem Wege übermittelt, insbesondere zusammen mit den Ergebnisantwortinformationen.

2. Verfahren gemäß Anspruch 1, **dadurch gekennzeichnet, dass** die ergänzenden Antwortinformationen ein oder mehrere Übungsaufgaben oder ein oder mehrere Lösungswege beinhalten, die den eingegebenen Merkmalswerten zugeordnet sind.

3. Verfahren gemäß Anspruch 1 oder 2, **dadurch gekennzeichnet, dass** die klassifizierenden Merkmale mathematische Aufgaben im Hinblick auf deren Zugehörigkeit zu mindestens einer von mehreren unterschiedlichen Themengruppen klassifizieren, der die jeweilige Aufgabe jeweils zugeordnet werden kann, oder im Hinblick auf deren Zugehörigkeit zu mindestens einer von mehreren unterschiedlichen Schulformen oder Klassenstufen, in der die Aufgabe regelmäßig gestellt wird.

4. Verfahren gemäß einem oder mehreren der vorhergehenden Ansprüche, **dadurch gekennzeichnet, dass** die ergänzenden Antwortinformationen automatisch aus der Datenbank ausgewählt werden oder durch eine hierfür geeignete Person.

5. Verfahren gemäß einem oder mehreren der vorhergehenden Ansprüche, **dadurch gekennzeichnet, dass** die ergänzenden Antwortinformationen durch eine geeignete Person erstellt werden und in das Datenverarbeitungssystem eingestellt werden, insbesondere der Datenbank hinzugefügt werden.

6. Verfahren gemäß einem oder mehreren der vorhergehenden Ansprüche, **dadurch gekennzeichnet, dass** die passenden ergänzenden Antwortinformationen automatisch in eine an den Benutzer adressierte E-Mail integriert werden, insbesondere als Anhang zu dieser E-Mail.

7. Verfahren gemäß Anspruch 6, **dadurch gekennzeichnet, dass** in die E-Mail, insbesondere automatisch, die Ergebnisantwortinformationen integriert werden.

8. Programmprodukt zur Ausführung des Verfahrens nach Anspruch 1, wenn es auf einer programmtechnisch eingerichteten Datenverarbeitungseinrichtung abläuft, insbesondere einem PC, einem Client-Server-System, einem Mobiltelefon, einem Laptop oder dergleichen.

9. Datenverarbeitungssystem zur Ausführung des Verfahrens nach Anspruch 1, mit einem in einem Speicher des Datenverarbeitungssystems hinterlegten Programmprodukt gemäß Anspruch 8.
